# EUROPEAN PATENT APPLICATION

(11) **EP 0 626 282 A1**
(43) Date of publication of application: **30.11.1994**
(21) Application number: 94830224.5
(22) Date of filing: 13.05.1994
(51) Int. Cl.: B60J 1/14, E05F 15/16

(54) **A rotatingly openable closure element assembly in a window**

(30) Priority: 25.05.1993 IT PR930013 U
(71) Applicant: Franchi, Giuseppe, I-29010 Alseno, (Piacenza) (IT)
(72) Inventor: Franchi, Giuseppe, I-29010 Alseno, (Piacenza) (IT)
(74) Representative: Lanzoni, Luciano

(57) **Abstract**

The invention applies to the field of windows, and more precisely relates to a rotatingly openable closure element (3) assembly for a window, wherein the closure element (3) is of a same shape as that of a curvedaperture in the window, said closure element (3) being pivoted at a vertex of the curved aperture at a horizontal axis (4) perpendicular to the closure element (3). Means for manually or electrically activating a rotation of the closure element (3) about the horizontal axis (4) are also provided.

## Description

The invention concerns a rotatingly openable closure element assembly in a window.

The invention is particularly but not exclusively applicable in the field of motor vehicle windows and semicircular windows used in building and typical of penthouses and attics.

Generally speaking there are three ways of opening windows presently fitted on motor vehicles:
- by vertical translation of the window which inserts in a chamber made in the vehicle door; translation can be done manually using a special handle, or by an electric motor;
- by horizontal translation of a portion of a window, which moves parallel to a fixed portion of the same window; the translation is performed manually by operating a knob which unblocks contemporaneously a friction element inserted between the fixed and the mobile windows portions;
- by rotation by a few degrees of a window or a portion of a window about a vertical axis, generally externalwise of the vehicle: this technique is widely used for back windows or for small deflector windows of motor vehicles.

The most widely-used window is the first above type, although it presents some drawbacks such as a need for extra space in the car for the lever mechanisms, whether electric or manual, and a fairly high final cost.

A principal aim of the present invention is to obviate the above-mentioned drawbacks and in particular to provide a cheaper window with opening lever mechanisms which are smaller overall and extremely simple.

A further aim is to provide a window that can be applied not only in the field of motor vehicles, but also in the construction industry for semicircular windows, security windows for offices and cabins, and in general for cabins. The invention also finds application in the nautical field.

The set aims are fully achieved by the window of the invention, which is provided with a rotatably opening part and is characterised as specified in the following claims.

Further characteristics and advantages of the present invention will better emerge from the detailed description that follows, of an embodiment of the invention, illustrated in the form of a non-limiting example in the accompanying drawings, in which:
figure 1 shows a frontal view of a door of a truck with the window mounted, and in a closed configuration;
figure 2 shows the window of figure 1 in an open configuration;
figure 3 shows a detail of the seal gasket taken along line III-III of figure 1;
figure 4 shows a detail of the seal gasket according to line IV-IV of figure 2;
figure 5 shows a diagram of an opening knob for manually rotating the window glass;
figure 6a is a schematic view from above of a rotation hinge of the glass, showing a mechanical friction mechanism;
figure 6b is a schematic view from above of a rotation hinge of the glass, with a direct current motor;

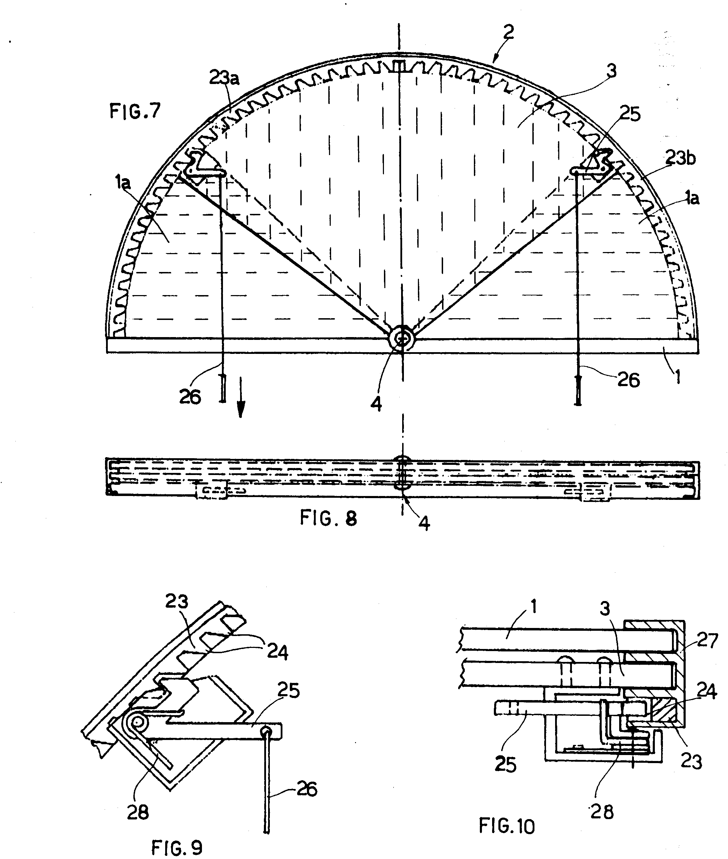

figure 7 is a frontal view of a rotatable window usable in the construction industry;
figure 8 shows the window of figure 7 in plan view;
figures 9 and 10 show, in a frontal view and in plan view respectively, a detail of the activating mechanisms of the window of figure 7.

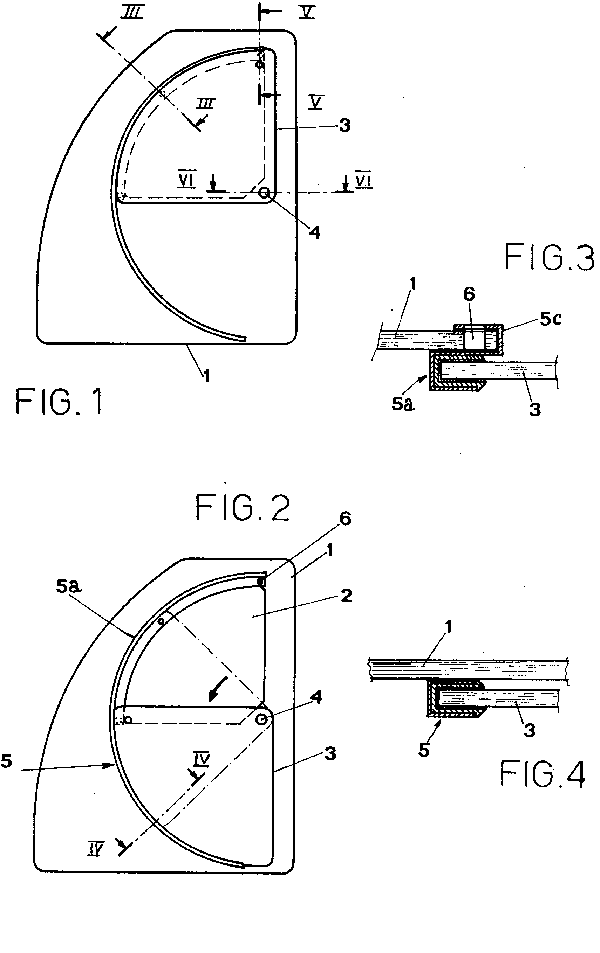

With reference to figures 1 and 2, a frame 1, for example a door of a truck or other industrial motor vehicle, is provided with an aperture 2 having a circular sector spreading over 90 degrees.

The door, together with the aperture 2, form the fixed frame of the window.

3 denotes a closing element or glass pane, inserted in the fixed frame, which exhibits a similar shape and size as the aperture 2, with a circular sector spreading over about 90 degrees.

The pane can rotate about a horizontal rotation axis 4 in a plane coinciding with the lie plane of the fixed frame 1, by an angle of 90 degrees, during which rotation it inserts into a chamber made in the door below the aperture 2.

As can be seen in figures 3 and 4, the circumference edge of the pane runs inside a C-guide 5 arranged in a semi-circle partly along the edge of the aperture 2 and partly internalwise of the door.

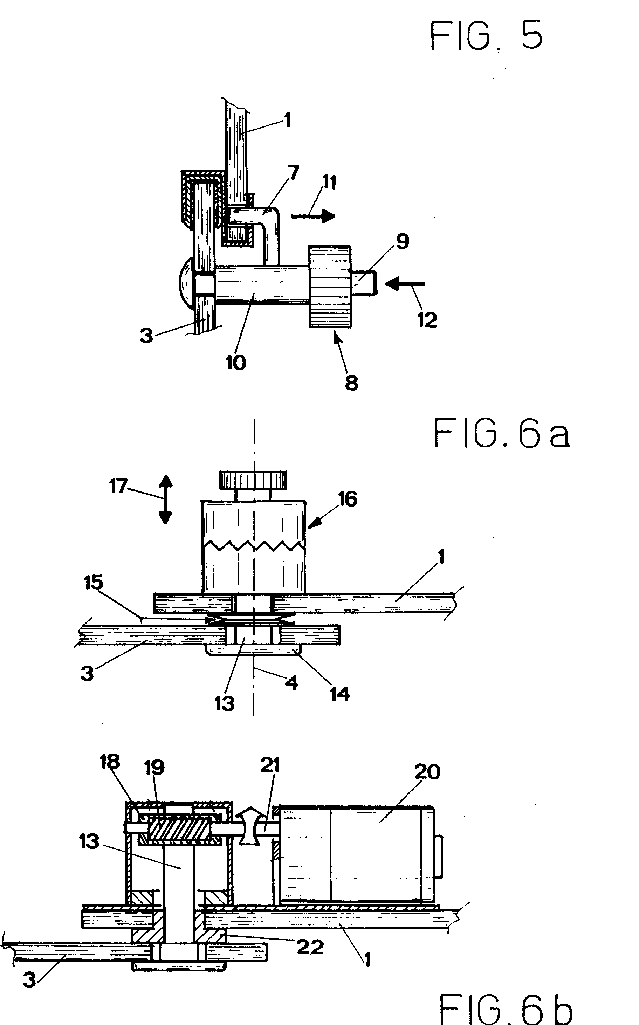

The portion 5a of C-guide arranged along the aperture 2 edge exhibits a part 5c which covers said aperture 2 edge, which part 5c is provided with a plurality of holes 6 for insertion of a pivot 7 (figure 5) of a knob 8 for blocking the pane in predetermined positions.

In particular, the knob 8 is provided with a button 9: on applying pressure on the button 9 in the direction of the arrow 12 a sleeve 10 bearing the pivot 7 is freed and the pivot 7 can then slide in the direction indicated by the arrow 11.

The knob 8 is solid to the pane 3 such that by moving the knob perpendicularly to the axis 4 the glass rotates about said axis 4.

The rotation is opposed by means of a system which envisages the presence of a pivot 13 provided with a head 14 in contact with one side of the glass pane 3 while a belleville washer 15 presses on the other side.

The pivot 13 crosses the pane 3, the belleville washer 15 and the frame 1, and is solid to a known-type device 16, which, when rotated, causes a translation of the pivot 13 in one of the two directions indicated by arrow 17, and duly imposes either more or less friction against the rotation of the pane 3.

The pane 3 can also be rotated by means of with an electric motor 20 rotating the pivot 4, as illustrated in figure 6b.

A worm screw 19 is keyed on the shaft 21 of the direct current electric motor 20, which worm screw 19 meshes with a cogwheel 18 keyed on the rotation pivot 13 of the pane 3, which pivot 13 is blocked between the head 14 and a bush 22 inserted in the frame 1.

The knob 8 or the electric motor 20, with the 90 degree turn obtained by the worm screw 19 and the cogwheel 18, constitute means for rotating the pane about the horizontal axis 4; the first means are manual, while the second are electric.

The means for opposing rotation of the glass pane illustrated in figure 6a are not necessary where an electric motor is applied: also, other means apart from those illustrated can be used to rotate the pane, just as the angle of the circular sector could differ from 90 degrees, without the invention changing in basic nature, and without foresaking the sought field of protection as embodied in the following claims.

The glass pane 3 could be made in another material, such as plastic.

The glass pane could also be square, or rectangular, without changing the rotatational functioning principal described herein.

With reference to figures from 7 to 10, wherein a further embodiment is illustrated which is particularly suited to building use, 1a and 1b indicate two fixed lateral circular panes of glass which are part of the frame 1 and which are mounted on guides 27 equipped with a rack 23 having fishtooth cogs 24. The rack 23 comprises two sectors 23a and 23b, in which the cogs 24 are symmetrical.

26 denotes two cables acting on lever mechanisms 25 opposed by springs 28 and destined to enmesh with the rack 23 in such a way as to prevent (in a rest situation) the sliding of the pane 3, which in this embodiment is a mobile pane of glass having a circular section.

By pulling the cables 26 the lever mechanisms 25 unblock and permit sliding of the pane 3 in relation to the fixed lateral panes.

The cables 26 together with the lever mechanisms 25 and the rack 23 constitute means for rotating the pane 3 about the axis 4.

## Claims

1. A rotatingly openable closure element assembly in a window, characterised in that it comprises:
a frame (1) exhibiting an aperture (2);
a closure element (3) having a same shape as the aperture (2) and pivoted at a vertex of the closure element (3), and able to rotate about an axis (4) perpendicular to a lie plane of the closure element (3), which axis (4) corresponds to a position of the vertex;
means for rotating the closure element (3) about the axis (4).

2. A rotatingly openable assembly in a window, characterised in that it comprises:
a frame (1) exhibiting an aperture (2) having a circular section;
a closure element (3) having a same shape as the aperture (2) and being pivoted at a vertex of said aperture (2), and being able to rotate about a horizontal axis (4) situated at the vertex and perpendicular to a lie plane of the closure element (3);
means for rotating the closure element (3) about the horizontal axis (4).

3. An assembly as in claim 2, characterised in that the angle of the circular section of the aperture (2) and the closure element (3) is about 90 degrees.

4. An assembly as in claim 1 or 2, characterised in that the means for a manual rotation of the closure element (3) about the axis (4) comprise a knob (8), solid to the closure element (3), which is provided with a pivot (7) which inserts in special holes (6) made in the frame (1); means for opposing said rotation being situated between the closure element (3) and the frame (1) at a rotation pivot (13) corresponding to the axis (4).

5. An assembly as in claim 2, characterised in that a gasket (5) is provided, being solid to the frame (1) and developing along a semicircumferential line coinciding with the curve described by the closure element (3) when said closure element (3) is rotated about the axis (4) coinciding with the center of said semicircumferential.

6. An assembly as in claim 1 or 2, characterised in that the means for rotating the closure element (3) about the horizontal axis (4) comprise an electric motor (20) which activates a worm wheel (19) enmeshing with a cogwheel (18) keyed on a pivot (13) solid to the closure element (3) at the axis (4).

7. An assembly as in claim 2, characterised in that it comprises a rack (23) associated to the frame (1); at least one lever mechanism (25) enmeshing with the rack (23) for permitting and blocking a rotating of the closure element (3) with respect to said rack (23).

8. An assembly as in claim 7, wherein the rack (23) exhibits fishtooth cogs and comprises two zones (23a, 23b), the cogs in one of the zones being symmetrical with respect to the cogs in the other of the zones.

9. An assembly as in claim 2, characterised in that the means for manually rotating the closure element (3) about the axis (4) comprise two cables (26) acting on respective lever mechanisms (25) which command a blocking or enable a sliding of the closure element (3).
